# FASCICULE DE BREVET EUROPEEN

(11) **EP 2 454 930 B1**
(45) Date de publication et mention de la délivrance du brevet: **16.12.2015**
(21) Numéro de dépôt: 11186331.2
(22) Date de dépôt: 24.10.2011
(51) Int. Cl.: A01D 34/73, F16D 13/76, F16H 55/36

(54) **Dispositif de transmission pour engin automoteur et engin automoteur équipé d'une telle transmission**
Übertragungsvorrichtung für einen Automotor, und mit einer solchen Übertragungsvorrichtung ausgestatteter Automotor
Transmission device for self-propelled vehicle and self-propelled vehicle provided with such a transmission

(30) Priorité: 22.11.2010 FR 1059567
(43) Date de publication de la demande: 23.05.2012
(73) Titulaire: France Reducteurs, 85500 Les Herbiers (FR)
(72) Inventeur: Blanchard, Robert, 85510 LE BOUPERE (FR)
(74) Mandataire: Godineau, Valérie

(56) Documents cités:
- FR-A- 1 078 160
- US-A- 3 269 200
- US-A- 4 117 652
- US-A- 4 857 033

## Description

La présente invention concerne un dispositif de transmission pour engin automoteur ainsi qu'un engin automoteur équipé d'une telle transmission.

Elle concerne plus particulièrement un dispositif de transmission du type comprenant un boîtier équipé d'un arbre d'entrée menant et d'un arbre de sortie auquel le mouvement de l'arbre d'entrée est transmis, cet arbre d'entrée portant une poulie réceptrice d'une transmission à courroie autour de laquelle la courroie de ladite transmission s'enroule.

De tels dispositifs de transmission sont bien connus à ceux versés dans cet art. Jusqu'à présent, dans un tel dispositif de transmission, lorsque la transmission à courroie est une transmission débrayable, il existe deux possibilités. La première possibilité consiste soit à réaliser le boîtier, pivotant autour de son arbre de sortie, soit à utiliser un galet tendeur pour permettre le passage de la courroie de l'état relâché à l'état tendu et inversement. Cette première possibilité présente l'inconvénient de nécessiter la présence de guides de la courroie pour garantir le passage de la courroie de l'état relâché à l'état tendu. En outre, un tel montage impose, du fait de la rotation du boîtier, un sens de rotation au niveau de l'arbre de sortie lorsque le boîtier est en outre pourvu intérieurement d'au moins un mécanisme d'embrayage dit automatique de sorte que le débrayage ne peut se faire que pour un seul sens de rotation de l'arbre de sortie. Enfin, l'utilisateur doute toujours de l'efficacité de la transmission lorsque la courroie présente un état détendu. Une telle solution est notamment décrite dans le brevet US 4,117,652. La deuxième possibilité consiste à disposer d'une poulie réceptrice dont les flasques sont à écartement variable. La poulie présente donc une position écartée de ses flasques dans laquelle la courroie est écartée du fond de la gorge et en contact avec un organe de roulement formant le fond de la gorge de la poulie et une position rapprochée des flasques de la poulie dans laquelle la courroie est tendue entre lesdits flasques. A nouveau pour un utilisateur, il existe un état relâché de la courroie qui laisse planer un doute sur l'efficacité de la transmission. Il est en outre nécessaire dans cette solution de disposer de guide de la courroie. Enfin, les différentes possibilités de rapprochement des flasques de la poulie ne permettent pas de garantir un diamètre d'enroulement sensiblement constant de la courroie, ce qui peut générer une variation non souhaitée de la vitesse d'entraînement en rotation de l'arbre d'entrée.

Une telle solution est décrite dans le brevet US 3,269,200. Ainsi, toutes les solutions de l'état de la technique mettent en oeuvre un organe de commande de la tension de la courroie mobile entre une première position correspondant à l'état relâché de la courroie et une deuxième position correspondant à l'état tendu de la courroie. A l'état débrayé de la transmission, la tension de la courroie est donc nécessairement inférieure à celle de la courroie à l'état embrayé. Le brevet US 4,117,652 montre un dispositif de transmission pour engin automoteur d'après l'introduction de la revendication 1.

Un but de la présente invention est donc de proposer un dispositif de transmission pour engin automoteur du type précité dont la conception permet de disposer d'une poulie réceptrice débrayable tout en maintenant une tension permanente de la courroie à l'intérieur de la gorge de ladite poulie.

A cet effet, l'invention a pour objet un dispositif de transmission pour engin automoteur, du type comprenant un boîtier équipé d'un arbre d'entrée menant et d'un arbre de sortie auquel le mouvement de l'arbre d'entrée est transmis, cet arbre d'entrée portant une poulie, réceptrice d'une transmission à courroie, autour de laquelle la courroie de ladite transmission s'enroule, caractérisé en ce que l'arbre d'entrée porte, en outre, une pièce solidaire en rotation dudit arbre, un organe de commande d'entraînement en déplacement de la poulie le long dudit arbre d'entrée dans le sens d'un rapprochement ou d'un écartement de la poulie de ladite pièce, pour le passage de la poulie, montée libre à rotation sur l'arbre d'entrée, de la position débrayée à l'état écarté de ladite pièce, à la position embrayée à l'état rapproché de ladite pièce, et un organe de roulement interposé entre organe de commande et poulie, la poulie entourant ledit organe de roulement et ladite poulie présentant une gorge de réception de la courroie de largeur prédéterminée constante pour permettre, à l'état tendu de la courroie à l'intérieur de la gorge, un maintien de la tension de ladite courroie, lors du déplacement de la poulie le long de l'arbre d'entrée.

Comme la poulie réceptrice présente une gorge de largeur, prise selon une direction parallèle à l'axe longitudinal de l'arbre d'entrée, prédéterminée constante, la poulie, qui est dite du type à diamètre d'enroulement sensiblement constant de la courroie, est apte à maintenir la courroie dans une position prédéterminée sensiblement constante par rapport au fond de la gorge de la poulie lors du déplacement de la poulie le long de l'arbre d'entrée. Ainsi, la poulie est apte à passer, par rapport à l'arbre d'entrée, d'une position débrayée dans laquelle elle est écartée de la pièce solidaire en rotation de l'arbre d'entrée, et est libre de tourner autour de l'arbre d'entrée indépendamment de la pièce solidaire en rotation dudit arbre d'entrée, de sorte que le mouvement de rotation de l'ensemble poulie-courroie n'est pas transmis à l'arbre d'entrée, à une position embrayée dans laquelle elle est rapprochée de la pièce solidaire en rotation de l'arbre d'entrée et forme avec cette dernière un ensemble solidaire en rotation de sorte que le mouvement de rotation de l'ensemble poulie-courroie est transmis via ladite pièce à l'arbre d'entrée. On note qu'indépendamment de la position débrayée ou embrayée de ladite poulie, la courroie demeure à l'état tendu à l'intérieur de la gorge de ladite poulie.

Divers modes de réalisation de l'invention peuvent être envisagés.

Ainsi, dans un premier mode de réalisation de l'invention, la poulie est, à l'état rapproché de ladite pièce, disposée en contact de friction avec ladite pièce par l'intermédiaire de la courroie.

Dans un deuxième mode de réalisation de l'invention, la poulie est, à l'état rapproché de ladite pièce, disposée directement en contact de friction avec ladite pièce.

Indépendamment du mode de réalisation retenu, la poulie réceptrice est formée de deux flasques circulaires reliés entre eux de manière fixe en écartement par un moyeu délimitant, avec les faces en regard des flasques, la gorge de réception de la courroie de la poulie.

De préférence, la pièce solidaire en rotation de l'arbre d'entrée et auquel le mouvement de rotation de la poulie réceptrice est transmis est une pièce du genre flasque ou coupelle, évidée centralement, pour pouvoir être enfilée sur ledit arbre d'entrée.

L'organe de commande est quant à lui, de préférence, un organe de commande rotatif qui affecte la forme d'un manchon enfilé sur l'arbre d'entrée, ce manchon étant muni à l'une de ses extrémités de rampes aptes à coopérer par contact d'appui avec des rampes complémentaires ménagées sur la face externe du boîtier pour permettre, lors d'un entraînement à rotation du manchon autour de l'arbre d'entrée, un déplacement axial du manchon le long dudit arbre d'entrée.

Généralement, l'organe de commande est un organe de commande rotatif qui, pour son entraînement à rotation autour de l'arbre d'entrée, est équipé d'une commande à câble.

De préférence, le boîtier est équipé de moyens de maintien de la courroie à l'état tendu, lesdits moyens de maintien comprenant au moins un ressort couplé, à une extrémité, au boîtier et couplable, à son extrémité opposée, à l'engin sur lequel ledit boîtier est destiné à être installé. Ce ressort permet de compenser l'usure progressive de la courroie susceptible d'induire un relâchement de la courroie. Ce ressort tend donc à rappeler le boîtier dans une position prédéterminée par rotation du boîtier autour de l'arbre de sortie dudit boîtier.

Généralement, pour permettre un montage libre à rotation de la poulie réceptrice sur l'arbre d'entrée, le dispositif de transmission comporte un organe de roulement porté par l'arbre d'entrée et interposé entre organe de commande et poulie, la poulie entourant ledit organe de roulement.

De préférence encore, l'arbre de sortie du boîtier porte d'une part, une roue dentée en prise avec l'arbre d'entrée apte à entrainer en rotation ladite roue, d'autre part, au moins un mécanisme d'embrayage disposé, à l'intérieur du boîtier, entre roue dentée et arbre de sortie d'entraînement d'au moins une roue de l'engin, ce mécanisme d'embrayage étant activé par l'entraînement en rotation de la roue dentée et désactivable par l'entraînement en rotation de l'arbre de sortie d'entraînement d'au moins une roue de l'engin, lorsque l'arbre d'entrée est arrêté ou, lorsque la vitesse de rotation de l'arbre de sortie d'entraînement d'au moins une roue de l'engin est supérieure à la vitesse de la rotation de la roue dentée.

Cette configuration permet la mise en roue libre de l'une et/ou l'autre roue d'une paire de roues de l'engin à l'état désactivé du mécanisme d'embrayage correspondant.

L'invention a encore pour objet un engin roulant automoteur, caractérisé en ce qu'il est équipé d'un dispositif de transmission du type précité.

L'invention sera bien comprise à la lecture de la description suivante d'exemples de réalisation, en référence aux dessins annexés dans lesquels :
la figure 1 représente une vue en perspective d'ensemble d'un engin, en l'occurrence d'une tondeuse à gazon, équipé d'un dispositif de transmission conforme à l'invention ;
la figure 2 représente une vue en perspective en position partiellement éclatée des éléments constituant un premier mode de réalisation d'un dispositif de transmission conforme à l'invention ;
les figures 3A et 3B représentent des vues en coupe du dispositif de transmission de la figure 2 en position débrayée de la poulie (figure 3A) et en position embrayée de ladite poulie (figure 3B) ;
la figure 4 représente une vue en perspective en position partiellement éclatée des éléments constituant un deuxième mode de réalisation d'un dispositif de transmission conforme à l'invention ;
les figures 5A et 5B représentent des vues en coupe du dispositif de la figure 4 en position débrayée de la poulie (figure 5A) et en position embrayée de ladite poulie (figure 5B) ;

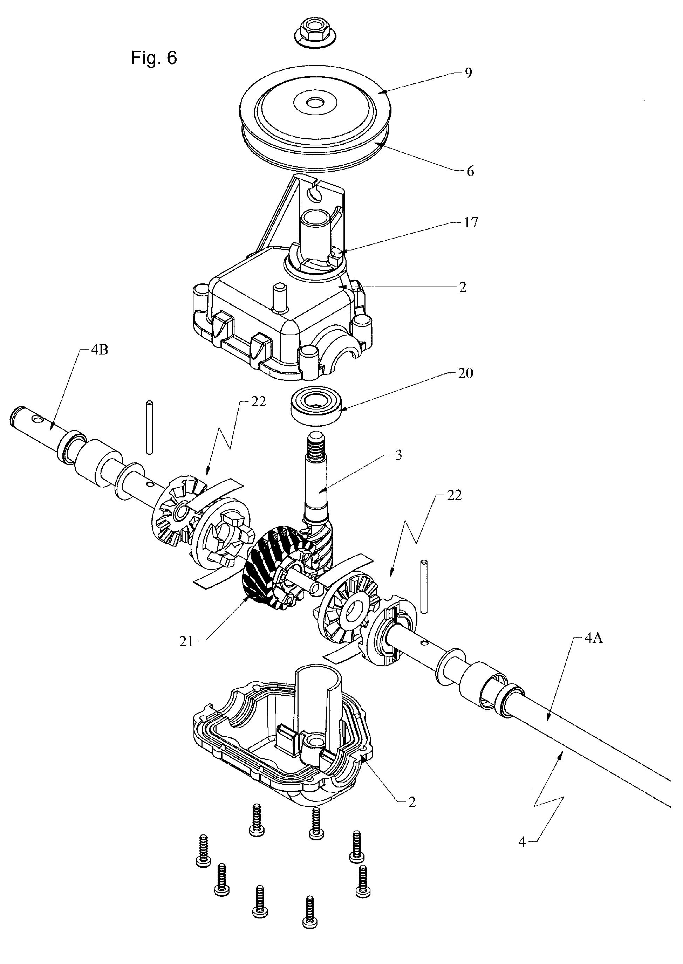

la figure 6 représente une vue partielle en perspective en position éclatée d'au moins certains éléments d'un dispositif de transmission conforme à l'invention.

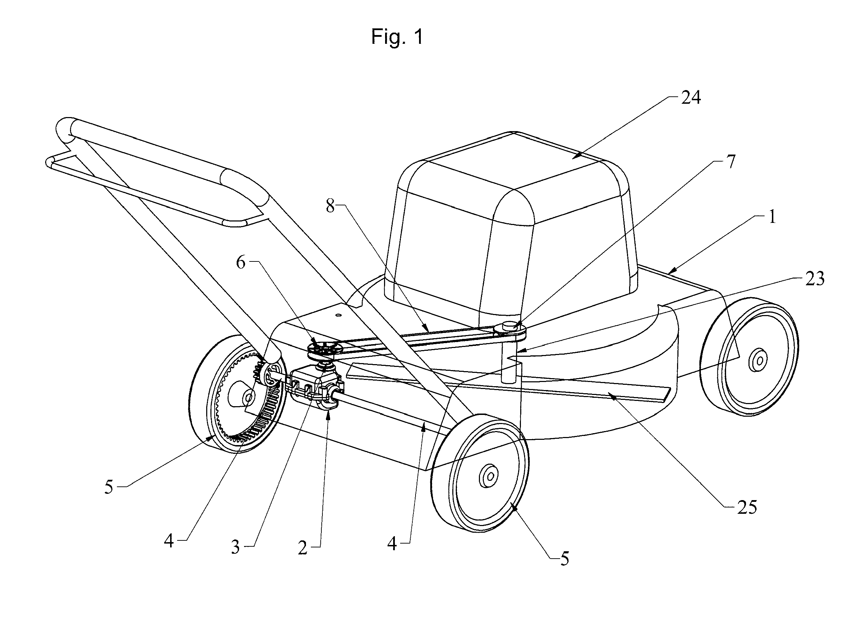

Comme mentionné ci-dessus, le dispositif de transmission, objet de l'invention, est plus particulièrement destiné à s'appliquer à un engin 1 roulant, notamment à conducteur marchant. La figure 1 représente l'application d'un tel dispositif de transmission à une tondeuse à gazon. Cet engin comporte généralement un châssis roulant, les roues de ce châssis étant représentées en 5 aux figures. Un moteur 24 équipe l'engin. L'arbre de sortie moteur 23 porte par exemple d'une part, une lame 25 de coupe, d'autre part une poulie 7 menante reliée par l'intermédiaire d'une courroie 8 à une poulie 6 réceptrice. Poulie 7 menante, poulie 6 réceptrice et courroie 8 forment une transmission à courroie. Cette poulie 6 réceptrice ou menée est elle-même montée sur un arbre 3 d'entrée destiné à venir se loger au moins partiellement dans un boîtier 2 de transmission. Cet arbre 3 d'entrée transmet son mouvement à l'arbre 4 de sortie dudit boîtier qui forme l'arbre 4 de sortie d'entraînement d'au moins une roue 5 de l'engin. Arbre 3 d'entrée et arbre 4 de sortie s'étendent sensiblement orthogonalement entre eux. L'arbre 3 d'entrée, qui porte la poulie 6 réceptrice de la transmission à courroie et la courroie 8 de ladite transmission qui s'enroule autour de la poulie 6 réceptrice, porte en outre une pièce 9 solidaire en rotation dudit arbre 3 et un organe 10 de commande d'entraînement en déplacement de la poulie 6 le long dudit arbre 3 d'entrée dans le sens d'un rapprochement ou d'un écartement de la poulie 6 de ladite pièce 9, pour le passage de la poulie 6, montée mobile axialement et libre à rotation sur l'arbre 3 d'entrée, de la position débrayée à l'état écarté de ladite pièce 9, à la position embrayée à l'état rapproché de ladite pièce 9. En position débrayée, la poulie 6 réceptrice ne transmet pas son mouvement de rotation à l'arbre 3 d'entrée. En position embrayée, la poulie 6 réceptrice transmet son mouvement de rotation à l'arbre 3 d'entrée. La poulie 6 réceptrice est donc apte, au cours de son déplacement axial le long dudit arbre 3 d'entrée, à être couplée ou désaccouplée de la pièce 9. Ladite poulie 6 présente une gorge 11 de réception de la courroie 8 de largeur prédéterminée constante pour permettre, à l'état tendu de la courroie 8 à l'intérieur de la gorge 11, un maintien de la tension de ladite courroie 8, lors du déplacement de la poulie 6 le long de l'arbre d'entrée.

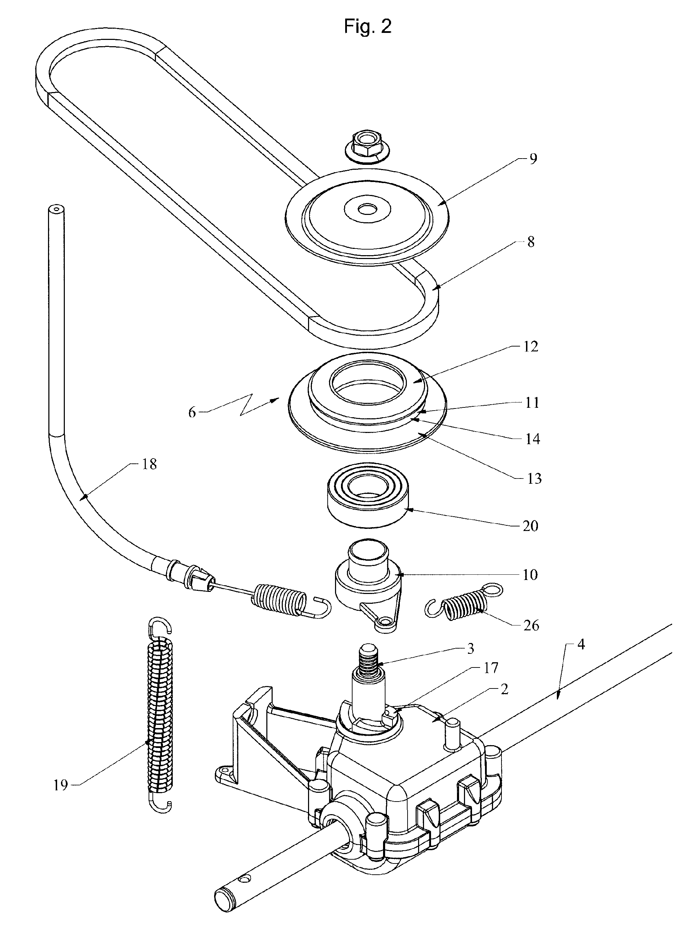

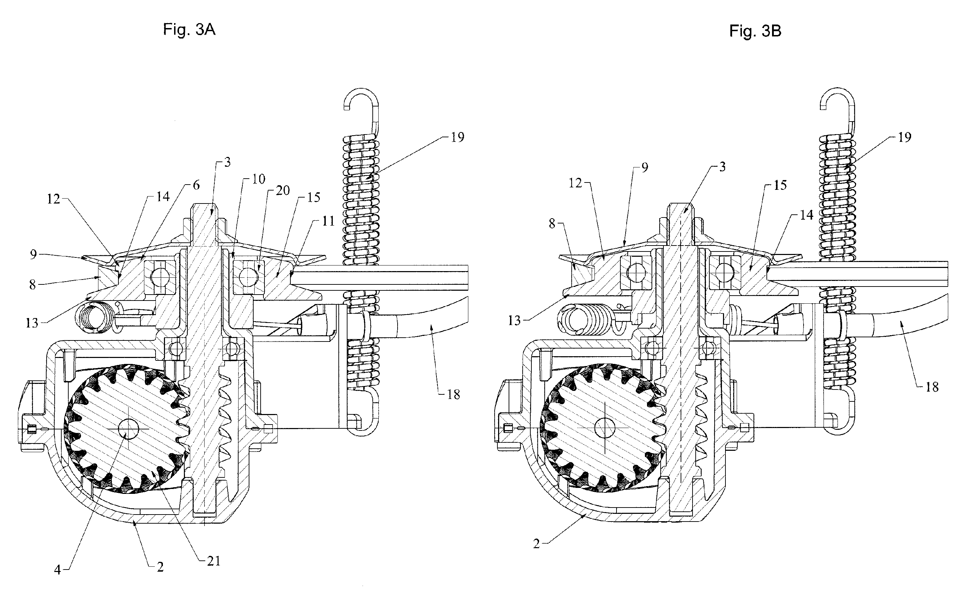

Dans un mode de réalisation de l'invention conforme aux figures 2, 3A et 3B, la poulie 6 est, à l'état rapproché de ladite pièce 9, disposée en contact de friction avec ladite pièce 9 par l'intermédiaire de la courroie 8.

Le mouvement de rotation de l'ensemble courroie-poulie 6 réceptrice est donc transmis via la courroie 8 et la pièce 9 solidaire en rotation de l'arbre 3 d'entrée à l'arbre 3 d'entrée.

Dans ce mode de réalisation, la poulie 6 réceptrice, enfilée sur l'arbre 3 d'entrée, est formée de deux flasques 12, 13 circulaires reliés entre eux de manière fixe en écartement par un moyeu 15 délimitant, avec les faces en regard des flasques 12, 13, la gorge 11 de réception de la courroie 8 de la poulie 6. Le flasque 12 de la poulie le plus proche de la pièce 9 solidaire en rotation de l'arbre 3 d'entrée est un flasque dit tronqué de diamètre inférieur au diamètre de l'autre flasque 13 pour ménager, au-delà de l'interruption dudit flasque 12, une zone dans laquelle la courroie 8 est apte à venir en contact de la pièce 9 à l'état rapproché de la poulie 6 de la pièce 9. La pièce 9 solidaire en rotation de l'arbre 3 d'entrée et auquel le mouvement de rotation de la poulie 6 réceptrice est transmis est une pièce du genre flasque ou coupelle, évidée centralement, pour pouvoir être enfilée sur ledit arbre 3 d'entrée.

Le passage de la poulie de la position débrayée à la position embrayée correspond au passage de la figure 3A dans laquelle l'ensemble poulie 6 réceptrice-courroie 8 est écarté de la pièce 9 à la figure 3B dans laquelle l'ensemble poulie 6 réceptrice-courroie 8 est rapproché et en contact de friction avec la pièce 9 de manière à permettre la transmission du mouvement de rotation de l'ensemble poulie-courroie à ladite pièce 9 qui, elle-même, est montée solidaire en rotation de l'arbre 3 d'entrée par goupillage ou par vissage à l'aide d'un écrou comme cela est représenté ou par l'intermédiaire de cannelures ou autres.

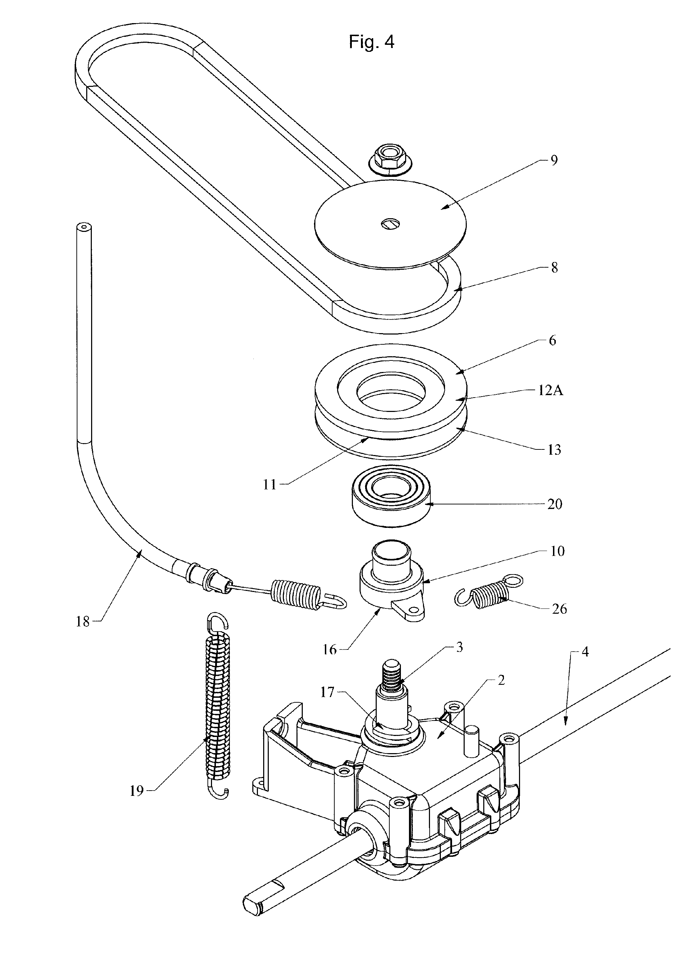

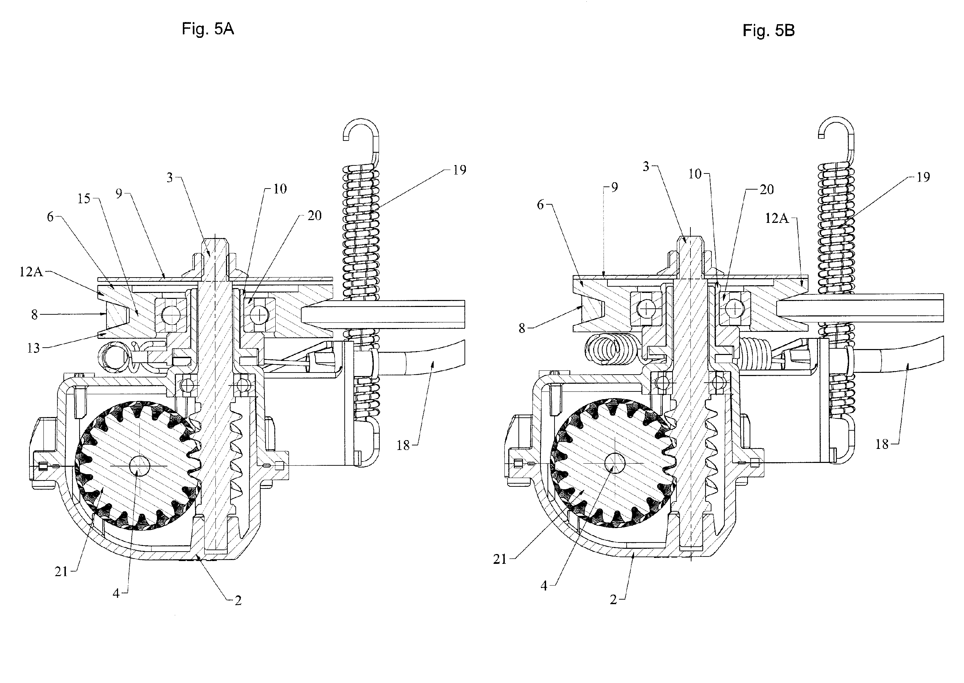

Dans un deuxième mode de réalisation de l'invention conforme aux figures 4, 5A et 5B, la poulie 6 est, à l'état rapproché de ladite pièce 9, disposée directement en contact de friction avec ladite pièce 9.

Dans ce mode de réalisation, à nouveau, la poulie 6 réceptrice est formée de deux flasques 12A, 13 circulaires reliés entre eux de manière fixe en écartement par un moyeu 15 délimitant, avec les faces en regard des flasques 12A, 13, la gorge 11 de réception de la courroie 8 de la poulie 6. Les flasques 12A et 13 sont de préférence de même diamètre. On note que le flasque est ici représenté en 12A pour le distinguer du flasque 12 du premier mode de réalisation de l'invention qui est un flasque tronqué.

A nouveau, la pièce 9 solidaire en rotation de l'arbre 3 d'entrée et auquel le mouvement de rotation de la poulie 6 réceptrice est transmis, est une pièce du genre flasque ou coupelle, évidée centralement, pour pouvoir être enfilée sur ledit arbre 3 d'entrée. Le flasque 12A vient donc ici directement en contact d'appui par friction avec la pièce 9 pour lui transmettre son mouvement de rotation.

Indépendamment du mode de réalisation retenu, l'organe 10 de commande est un organe de commande rotatif qui affecte la forme d'un manchon enfilé sur l'arbre 3 d'entrée, ce manchon étant muni à l'une de ses extrémités de rampes 16 aptes à coopérer par contact d'appui avec des rampes 17 complémentaires ménagées sur la face externe du boîtier 2 pour permettre, lors d'un entraînement à rotation du manchon autour de l'arbre 3 d'entrée, un déplacement axial du manchon le long dudit arbre 3 d'entrée. Ces rampes sont de préférence des rampes circulaires coaxiales à l'arbre 3 d'entrée.

Pour son entraînement en rotation autour de l'arbre 3 d'entrée, l'organe 10 de commande est équipé d'une commande 18 à câble qui comprend au moins un câble, chargé par ressort, actionné à partir d'une manette ou levier de commande disposé au niveau du guidon ou volant de l'engin. La traction générée sur le câble entraîne le manchon constitutif de l'organe 10 de commande à se déplacer angulairement autour de l'arbre 3 d'entrée et axialement le long dudit arbre 3 en raison de la présence des rampes. Le relâchement du câble entraîne un déplacement angulaire et axial en sens inverse de l'organe 10 de commande sous l'action d'un ressort de rappel 26.

Dans les exemples représentés, pour un montage libre à rotation de la poulie sur l'arbre 3 d'entrée, le dispositif comporte un organe 20 de roulement porté par l'arbre 3 d'entrée et interposé entre organe 10 de commande et poulie 6, la poulie 6 entourant ledit organe 20 de roulement.

Enfin, le boîtier 2 est équipé d'un ressort 19 couplé à une extrémité au boîtier 2 et couplable à son extrémité opposée à l'engin 1 sur lequel ledit boîtier 2 est destiné à être installé. Ce ressort est un ressort hélicoïdal qui rappelle le boîtier dans une position prédéterminée correspondant à l'état tendu de la courroie par rotation dudit boîtier autour de l'arbre 4 de sortie.

Pour la transmission du mouvement de l'arbre 3 d'entrée du boîtier à l'arbre 4 de sortie du boîtier, diverses solutions sont envisageables.

Dans l'exemple représenté, l'arbre 4 de sortie du boîtier porte d'une part, une roue 21 dentée en prise avec l'arbre 3 d'entrée apte à entrainer en rotation ladite roue 21, d'autre part, au moins un mécanisme 22 d'embrayage disposé, à l'intérieur du boîtier 2, entre roue 21 dentée et arbre 4 de sortie d'entraînement d'au moins une roue 5 de l'engin, ce mécanisme 22 d'embrayage étant activé par l'entraînement en rotation de la roue 21 dentée et désactivable par l'entraînement en rotation de l'arbre 4 de sortie d'entraînement d'au moins une roue 5 de l'engin, lorsque l'arbre 3 d'entrée est arrêté ou, lorsque la vitesse de rotation de l'arbre 4 de sortie d'entraînement d'au moins une roue 5 de l'engin est supérieure à la vitesse de la rotation de la roue 21 dentée.

En particulier, l'arbre 4 de sortie du boîtier est de préférence formé d'au moins deux demi-arbres 4A, 4B couplés chacun à une roue 5 de l'engin et le boîtier 2 loge, de part et d'autre de la roue 21 dentée, deux mécanismes 22 d'embrayage coopérant chacun avec l'un des demi-arbres 4A, 4B d'entraînement de roue de l'engin pour permettre la mise en roue libre de l'une et/ou l'autre roue d'une paire de roues de l'engin.

Dans l'exemple représenté, chaque mécanisme 22 d'embrayage est activé par l'entraînement en rotation de la roue 21 dentée et le déplacement axial d'au moins une pièce sur ledit arbre de sortie. Cette pièce, mobile axialement sur ou le long de l'arbre de sortie, porte au moins une rampe coopérant avec une pièce solidaire en rotation dudit arbre pour permettre, en phase d'embrayage, la solidarisation en rotation entre la ou les rampes de la pièce mobile et la pièce solidaire en rotation de l'arbre d'entraînement de roue et par suite la transmission du mouvement de rotation de la pièce à l'arbre de sortie et, en phase de débrayage, la désolidarisation entre la ou les rampes de la pièce mobile et la pièce solidaire en rotation de l'arbre. En particulier, la roue dentée présente, sur chacune de ses faces, des rampes coopérant avec des rampes complémentaires portées par un plateau d'embrayage monté libre à rotation sur l'arbre de sortie et mobile axialement sous l'action desdites rampes, ce plateau étant lui-même, lors de ses déplacements, apte à être couplé ou désaccouplé d'une pièce solidaire de l'arbre de sortie.

Dans l'exemple représenté, ce plateau d'embrayage est muni, sur chacune de ses faces, de rampes. Les rampes d'une face du plateau d'embrayage coopèrent, lors de la phase d'embrayage avec les rampes de la roue dentée, pour un déplacement axial du plateau dans une première direction de solidarisation en rotation du plateau avec une roue portée par l'arbre de sortie et solidaire en rotation de ce dernier, les rampes de l'autre face du plateau coopérant, lors de la face de débrayage, avec des rampes de la roue portée par l'arbre de sortie et solidaire en rotation de ce dernier pour provoquer, par déplacement axial de sens opposé dudit plateau, la mise en roue libre de l'arbre de sortie correspondant.

Chaque mécanisme d'embrayage est activé par l'entraînement en rotation de la roue dentée. Cet entraînement en rotation de la roue dentée est obtenu, après passage à la position embrayée, de la poulie 6 réceptrice, c'est-à-dire lorsque l'arbre moteur tourne, que la poulie 6 réceptrice est commandée par l'organe 10 de commande dans le sens d'un rapprochement de la pièce 9 jusqu'à venir en contact direct ou indirect avec cette dernière pour transmettre son mouvement de rotation à l'arbre 3 d'entrée qui lui-même est une vis sans fin qui transmet son mouvement à la roue 21 dentée avec laquelle il est en prise par engrènement. La désactivation du mécanisme d'embrayage est obtenue par l'entraînement en rotation de l'un des demi-arbres de sortie lorsque l'arbre d'entrée est arrêté. En effet, au cours de l'arrêt de l'arbre d'entrée, l'inertie de la machine entraîne une poursuite du déplacement de la machine d'une valeur suffisante pour entraîner en rotation les arbres de sortie de l'engin et générer, par suite, une désactivation du mécanisme d'embrayage. De la même manière, chaque mécanisme d'embrayage est conçu pour être désactivé lorsque la vitesse de rotation de l'arbre de sortie, qui porte ledit mécanisme, est supérieure à la vitesse de rotation de la roue dentée. A l'état désactivé du mécanisme d'embrayage, la roue de l'engin et le demi-arbre qui la porte peuvent tourner librement dans les deux sens de rotation. En outre, chaque roue d'une paire de roues de l'engin peut tourner indépendamment de l'autre roue de l'engin.

Chaque poulie 6 réceptrice est quant à elle ramenée en position débrayée par simple relâchement de la commande à câble. La poulie réceptrice tend alors, sous l'effet de son propre poids, à s'écarter de la pièce 9 au moins par déplacement axial le long de l'arbre 3 d'entrée. Dans toutes ses positions, la courroie 8 est tendue et reste en appui sur le fond 14 de la gorge 11 de la poulie 6.

## Revendications

1. Dispositif de transmission pour engin (1) automoteur, du type comprenant un boîtier (2) équipé d'un arbre (3) d'entrée menant et d'un arbre (4) de sortie auquel le mouvement de l'arbre (3) d'entrée est transmis, cet arbre (3) d'entrée portant une poulie (6), réceptrice d'une transmission à courroie (8), autour de laquelle la courroie (8) de ladite transmission s'enroule, **caractérisé en ce que** l'arbre (3) d'entrée porte, en outre, une pièce (9) solidaire en rotation dudit arbre (3), un organe (10) de commande d'entraînement en déplacement de la poulie (6) le long dudit arbre (3) d'entrée dans le sens d'un rapprochement ou d'un écartement de la poulie (6) de ladite pièce (9), pour le passage de la poulie (6), montée libre à rotation sur l'arbre (3) d'entrée, de la position débrayée à l'état écarté de ladite pièce (9), à la position embrayée à l'état rapproché de ladite pièce (9), et un organe (20) de roulement interposé entre organe (10) de commande et poulie (6), la poulie (6) entourant ledit organe (20) de roulement et ladite poulie (6) présentant une gorge (11) de réception de la courroie (8) de largeur prédéterminée constante pour permettre, à l'état tendu de la courroie (8) à l'intérieur de la gorge (11), un maintien de la tension de ladite courroie (8), lors du déplacement de la poulie (6) le long de l'arbre d'entrée.

2. Dispositif selon la revendication 1 **caractérisé en ce que** la poulie (6) est, à l'état rapproché de ladite pièce (9), disposée, en contact de friction avec ladite pièce (9), par l'intermédiaire de la courroie (8).

3. Dispositif selon la revendication 1 **caractérisé en ce que** la poulie (6) est, à l'état rapproché de ladite pièce (9), disposée directement en contact de friction avec ladite pièce (9).

4. Dispositif selon l'une des revendications **précédentes**,**caractérisé en ce que** la poulie (6) réceptrice est formée de deux flasques (12, 12A ; 13) circulaires reliés entre eux de manière fixe en écartement par un moyeu (15) délimitant, avec les faces en regard des flasques (12, 12A ; 13), la gorge (11) de réception de la courroie (8) de la poulie (6).

5. Dispositif selon la revendication 4,
**caractérisé en ce que** le flasque (12) de la poulie, le plus proche de la pièce (9) solidaire en rotation de l'arbre (3) d'entrée, est un flasque dit tronqué de diamètre inférieur au diamètre de l'autre flasque (13) pour ménager, au-delà de l'interruption dudit flasque (12), une zone dans laquelle la courroie (8) est apte à venir en contact de la pièce (9) à l'état rapproché de la poulie (6) de la pièce (9).

6. Dispositif selon l'une des revendications précédentes,
**caractérisé en ce que** la pièce (9) solidaire en rotation de l'arbre (3) d'entrée et auquel le mouvement de rotation de la poulie (6) réceptrice est transmis est une pièce du genre flasque ou coupelle, évidée centralement, pour pouvoir être enfilée sur ledit arbre (3) d'entrée.

7. Dispositif selon l'une des revendications précédentes,
**caractérisé en ce que** l'organe (10) de commande est un organe de commande rotatif qui affecte la forme d'un manchon enfilé sur l'arbre (3) d'entrée, ce manchon étant muni à l'une de ses extrémités de rampes (16) aptes à coopérer par contact d'appui avec des rampes (17) complémentaires ménagées sur la face externe du boîtier (2) pour permettre, lors d'un entraînement à rotation du manchon autour de l'arbre (3) d'entrée, un déplacement axial du manchon le long dudit arbre (3) d'entrée.

8. Dispositif selon l'une des revendications précédentes,
**caractérisé en ce que** l'organe (10) de commande est un organe de commande rotatif qui, pour son entraînement à rotation autour de l'arbre (3) d'entrée, est équipé d'une commande (18) à câble.

9. Dispositif selon l'une des revendications précédentes,
**caractérisé en ce que** le boîtier (2) est équipé de moyens de maintien de la courroie (8) à l'état tendu, lesdits moyens de maintien comprenant au moins un ressort (19) couplé, à une extrémité, au boîtier (2) et couplable, à son extrémité opposée, à l'engin (1) sur lequel ledit boîtier (2) est destiné à être installé.

10. Dispositif selon l'une des revendications précédentes,
**caractérisé en ce que** l'arbre (4) de sortie du boîtier porte d'une part, une roue (21) dentée en prise avec l'arbre (3) d'entrée apte à entrainer en rotation ladite roue (21), d'autre part, au moins un mécanisme (22) d'embrayage disposé, à l'intérieur du boîtier (2), entre roue (21) dentée et arbre (4) de sortie d'entraînement d'au moins une roue (5) de l'engin, ce mécanisme (22) d'embrayage étant activé par l'entraînement en rotation de la roue (21) dentée et désactivable par l'entraînement en rotation de l'arbre (4) de sortie d'entraînement d'au moins une roue (5) de l'engin, lorsque l'arbre (3) d'entrée est arrêté ou, lorsque la vitesse de rotation de l'arbre (4) de sortie d'entraînement d'au moins une roue (5) de l'engin est supérieure à la vitesse de la rotation de la roue (21) dentée.

11. Engin (1) roulant automoteur,
**caractérisé en ce qu'**il est équipé d'un dispositif de transmission conforme à l'une des revendications 1 à 10.

## Patentansprüche

1. Übertragungsvorrichtung für ein selbstfahrendes Fahrzeug (1) des Typs, der ein Gehäuse (2) umfasst, das mit einer führenden Eingangswelle (3) und einer Ausgangswelle (4), an die die Bewegung der Eingangswelle (3) übertragen wird, ausgestattet ist, wobei diese Eingangswelle (3) eine Scheibe (6) trägt, die einen Riementrieb (8) empfängt, um die der Riementrieb (8) gewickelt ist, **dadurch gekennzeichnet, dass** die Eingangswelle (3) ferner ein Teil (9) trägt, das mit der Welle (3) fest in Rotation verbunden ist, und ein Antriebssteuerorgan (10), das die Scheibe (6) entlang der Eingangswelle (3) in Richtung einer Annäherung oder einer Entfernung der Scheibe (6) von dem Teil (9) für den Übergang der frei auf der Eingangswelle (3) montierten rotierenden Scheibe (6) von der ausgekuppelten Position im beabstandeten Zustand des Teils (9) in die eingekuppelte Position im angenäherten Zustand des Teils (9) verlagert, und ein Lagerorgan (20) zwischen dem Steuerorgan (10) und der Scheibe (6), wobei die Scheibe das Lagerorgan (20) umschließt, und wobei die Scheibe (6) eine Aufnahmenut (11) des Riemens (8) in einer vorbestimmten konstanten Breite aufweist, um im gespannten Zustand des Riemens (8) im Innern der Nut (11) bei der Verlagerung der Scheibe (6) entlang der Eingangswelle ein Aufrechterhalten der Spannung des Riemens (8) zu erlauben.

2. Vorrichtung nach Anspruch 1, **dadurch gekennzeichnet, dass** die Scheibe (6) im angenäherten Zustand des Teils (9) mit Hilfe des Riemens (8) im Reibekontakt mit dem Teil (9) angeordnet ist.

3. Vorrichtung nach Anspruch 1, **dadurch gekennzeichnet, dass** die Scheibe (6) im angenäherten Zustand des Teils (9) direkt im Reibekontakt mit dem Teil (9) angeordnet ist.

4. Vorrichtung nach einem der vorangehenden Ansprüche, **dadurch gekennzeichnet, dass** die Aufnahmescheibe (6) von zwei kreisrunden Flanschen (12, 12A; 13) gebildet ist, die miteinander fest verbunden und dabei von einer Nabe (15) beabstandet sind, die mit den Flächen gegenüber den Flanschen (12, 12A; 13) die Aufnahmenut (11) des Riemens (8) der Scheibe (6) begrenzt.

5. Vorrichtung nach Anspruch 4,
**dadurch gekennzeichnet, dass** der Flansch (12) der Scheibe, der dem Teil (9), das mit der Eingangswelle (3) fest in Rotation verbunden ist, am nächsten ist, ein so genannter abgestumpfter Flansch ist mit einem Durchmesser, der kleiner als der Durchmesser des anderen Flanschs (13) ist, um jenseits der Unterbrechung des Flanschs (12) eine Zone zu bilden, in welcher der Riemen (8) imstande ist, mit dem Teil (9) im angenäherten Zustand der Scheibe (6) an das Teil (9) in Kontakt zu kommen.

6. Vorrichtung nach einem der vorangehenden Ansprüche,
**dadurch gekennzeichnet, dass** das Teil (9), das mit der Eingangswelle (3) fest in Rotation verbunden ist und an die die Rotationsbewegung der Aufnahmescheibe (6) übertragen wird, ein zentral ausgespartes Teil in der Art eines Flanschs oder Tellers ist, um auf die Eingangswelle (3) aufsteckbar zu sein.

7. Vorrichtung nach einem der vorangehenden Ansprüche,
**dadurch gekennzeichnet, dass** das Steuerorgan (10) ein rotierendes Steuerorgan ist, das die Form einer auf die Eingangswelle (3) aufgesteckten Muffe hat, wobei diese Muffe an einem ihrer Enden mit Rampen (16) ausgestattet ist, die imstande sind, durch Stützkontakt mit komplementären Rampen (17) zusammenzuarbeiten, die auf der Außenfläche des Gehäuses (2) ausgebildet sind, um bei einem Rotationsantrieb der Muffe um die Eingangswelle (3) eine axiale Verlagerung der Muffe entlang der Eingangswelle (3) zu erlauben.

8. Vorrichtung nach einem der vorangehenden Ansprüche,
**dadurch gekennzeichnet, dass** das Steuerorgan (10) ein rotierendes Steuerorgan ist, das für seinen Rotationsantrieb um die Eingangswelle (3) mit einer Kabelsteuerung (18) ausgestattet ist.

9. Vorrichtung nach einem der vorangehenden Ansprüche,
**dadurch gekennzeichnet, dass** das Gehäuse (2) mit Haltemitteln des Riemens (8) in gespanntem Zustand ausgestattet ist, wobei die Haltemittel mindestens eine Feder (19) umfassen, die an einem Ende mit dem Gehäuse (2) verbunden ist und die an ihrem gegenüberliegenden Ende mit dem Fahrzeug (1) verbindbar ist, auf dem das Gehäuse (2) zur Montage bestimmt ist.

10. Vorrichtung nach einem der vorangehenden Ansprüche,
**dadurch gekennzeichnet, dass** die Ausgangswelle (4) des Gehäuses zum einen ein Zahnrad (21) im Eingriff mit der Eingangswelle (3) trägt, die imstande ist, das Rad (21) rotierend anzutreiben, zum anderen mindestens einen Kupplungsmechanismus (22), der im Innern des Gehäuses (2) zwischen Zahnrad (21) und Ausgangsantriebswelle (4) mindestens eines Rads (5) des Fahrzeugs angeordnet ist, wobei dieser Kupplungsmechanismus (22) durch den Rotationsantrieb des Zahnrads (21) aktiviert wird und durch den Rotationsantrieb der Ausgangsantriebswelle (4) mindestens eines Rads (5) des Fahrzeugs deaktivierbar ist, wenn die Eingangswelle (3) angehalten ist oder wenn die Rotationsgeschwindigkeit der Ausgangsantriebswelle (4) mindestens eines Rads (5) des Fahrzeugs höher als die Rotationsgeschwindigkeit des Zahnrads (21) ist.

11. Selbstfahrendes rollendes Fahrzeug (1),
**dadurch gekennzeichnet, dass** es mit einer Übertragungsvorrichtung nach einem der Ansprüche 1 bis 10 ausgestattet ist.

## Claims

1. Transmission device for self-propelled equipment (1), of the type comprising a housing (2) equipped with a driving input shaft (3) and with an output shaft (4) to which the movement of the input shaft (3) is transmitted, this input shaft (3) bearing a receiving pulley (6) of a belt transmission (8), around which pulley the belt (8) of this transmission is wrapped, **characterized in that** the input shaft (3) also bears a component (9) that rotates as one with the said shaft (3) and a member (10) for controlling the movement of the pulley (6) along the said input shaft (3) in terms of the movement of the pulley (6) towards or away from said component (9) so that the pulley (6), which is mounted with the freedom to rotate on the input shaft (3), can be moved from the disengaged position when it is away from the said component (9), into the engaged position when it is close to the said component (9), and a rolling bearing member (20) borne by the input shaft (3) and interposed between control member (10) and pulley (6), the pulley (6) surrounding the said rolling bearing member (20), the said pulley (6) having a groove (11) of constant predetermined width for accepting the belt (8) so that when the belt (8) is taut inside the groove (11), the belt (8) tension can be maintained as the pulley (6) moves along the input shaft.

2. Device according to Claim 1,
**characterized in that** when the pulley (6) is close to the said component (9) it is in frictional contact with the said component (9) via the belt (8).

3. Device according to Claim 1,
**characterized in that** when the pulley (6) is close to the said component (9), it is in direct frictional contact with the said component (9).

4. Device according to one of the preceding claims,
**characterized in that** the receiving pulley (6) is formed of two circular cheeks (12, 12A; 13) which are joined together with a fixed spacing by a hub (15) which, with the opposing faces of the cheeks (12, 12A; 13) delimits the groove (11) that accommodates the belt (8) of the pulley (6).

5. Device according to Claim 4,
**characterized in that** the pulley cheek (12) closest to the component (9) that rotates as one with the input shaft (3) is a cheek that is said to be truncated having a diameter smaller than the diameter of the other cheek (13) so as to form, beyond the interruption of the said cheek (12), a region in which the belt (8) can come into contact with the component (9) when the pulley (6) is up close to the component (9).

6. Device according to one of the preceding claims,
**characterized in that** the component (9) that rotates as one with the input shaft (3) and to which the rotational movement of the receiving pulley (6) is transmitted is a component of the flange or cup kind, open at the centre, so that it can be slipped over the said input shaft (3).

7. Device according to one of the preceding claims,
**characterized in that** the control member (10) is a rotary control member which adopts the form of a sleeve slipped over the input shaft (3), this sleeve being equipped at one of its ends with ramps (16) able to collaborate in bearing contact with complementary ramps (17) formed on the external face of the housing (2) so that as the sleeve is turned about the input shaft (3), it is caused to move axially along the said input shaft (3).

8. Device according to one of the preceding claims,
**characterized in that** the control member (10) is a rotary control member which, in order to rotate it about the input shaft (3), is fitted with a cable control (18).

9. Device according to one of the preceding claims,
**characterized in that** the housing (2) is fitted with means for keeping the belt (8) taut, these tension-maintaining means comprising at least one spring (19) coupled, at one end, to the housing (2) and which, at its opposite end, can be coupled to the equipment (1) on which the said housing (2) is intended to be installed.

10. Device according to one of the preceding claims,
**characterized in that** the output shaft (4) of the housing bears, on the one hand, a toothed wheel (21) in mesh with the input shaft (3) capable of turning the said wheel (21) and, on the other hand, at least one clutch engagement mechanism (22) arranged, inside the housing (2), between toothed wheel (21) and output shaft (4) for driving at least one wheel (5) of the equipment, this clutch engagement mechanism (22) being activated by the turning of the toothed wheel (21) and able to be deactivated by rotating the output shaft (4) that drives at least one wheel (5) of the equipment, when the input shaft (3) is stationary or when the rotational speed of the output shaft (4) that drives at least one wheel (5) of the equipment is higher than the rotational speed of the toothed wheel (21).

11. Self-propelled rolling equipment (1),
**characterized in that** it is fitted with a transmission device according to one of Claims 1 to 10.
